# EUROPÄISCHE PATENTSCHRIFT

(11) **EP 1 644 274 B1**
(45) Veröffentlichungstag und Bekanntmachung des Hinweises auf die Patenterteilung: **27.12.2006**
(21) Anmeldenummer: 04733790.2
(22) Anmeldetag: 19.05.2004
(51) Int. Cl.: B65G 1/04, B66F 9/00, H02J 5/00

(54) **SPURGEFÜHRTES TRANSPORTSYSTEM**
GUIDED TRANSPORT SYSTEM
SYSTEME DE TRANSPORT SUR RAILS

(30) Priorität: 01.07.2003 DE 10329776
(43) Veröffentlichungstag der Anmeldung: 12.04.2006
(73) Patentinhaber: Sew-Eurodrive GmbH & Co. KG, 76646 Bruchsal (DE)
(72) Erfinder: PODBIELSKI, Leobald, 76199 Karlsruhe (DE); LAUBENSTEIN, Udo, 76297 Stutensee (DE); SCHMIDT, Josef, 76676 Graben-Neudorf (DE); SCHNEIDER, Bernhard, 68794 Oberhausen-Rheinhausen (DE)
(86) Internationale Anmeldenummer: PCT/EP2004/005370
(87) Internationale Veröffentlichungsnummer: WO 2005/002998

(56) Entgegenhaltungen:
- EP-A- 1 231 163
- DE-A- 19 626 966
- DE-U- 9 210 587
- DE-U- 9 408 348

## Beschreibung

Die Erfindung betrifft ein spurgeführtes Transportsystem.

Aus der DE 197 35 624 C1 ist ein Verfahren bekannt zur berührungslosen Energieübertragung elektrischer Leistung aus einer Mittelfrequenzstromquelle mit einer Mittelfrequenz f_{M} auf einen oder mehrere bewegte Verbraucher über eine Übertragungsstrecke und aus den bewegten Verbrauchern zugeordneten Übertragerköpfen mit nachgeschaltetem Anpasssteller zum Einstellen der von der Übertragungsstrecke aufgenommenen Leistung, wobei die Übertragungsstrecke von der Mittelfrequenzstromquelle mit einem während der Leistungsübertragung in seinem Effektivwert konstanten Mittelfrequenzstrom gespeist wird.

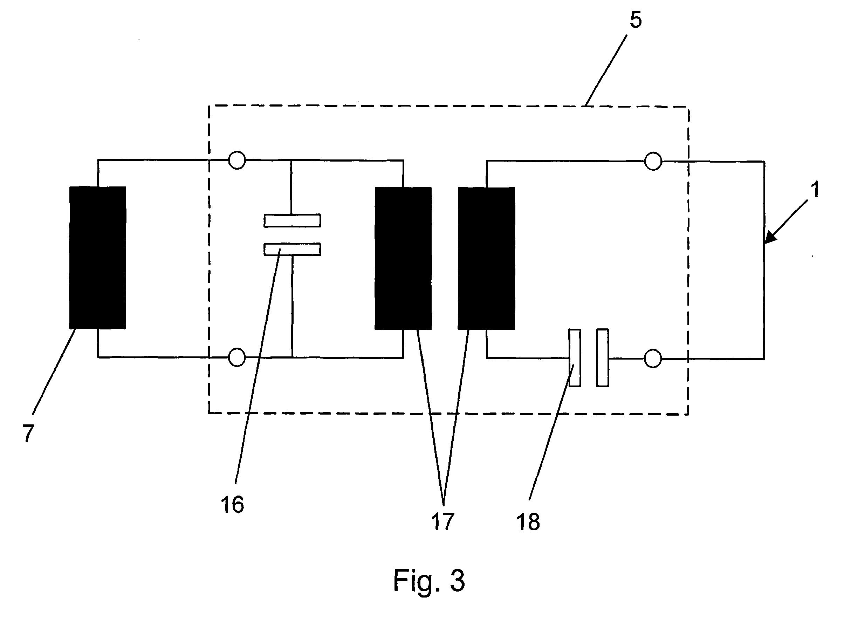

Der Anpasssteller wandelt den aus dem Übertragerkopf eingeprägten mittelfrequenten Strom in eine Gleichspannung. Wie in den Figuren 3, 7a und 7b und zugehöriger Beschreibung der DE 197 35 624 C1 beschrieben, wird der Schalter T_{S} synchron zum Verlauf und mit der doppelten Frequenz des Eingangsstroms des Anpassstellers betrieben. Ein erheblicher Nachteil ist jedoch, dass diese hohe Schaltfrequenz 2 f_{M} hohe Schaltverluste zur Folge hat. Ein weiterer Nachteil ist, dass sich das synchrone Prinzip nicht mehr aufrecht erhalten lässt bei Verwendung mehrerer asynchron arbeitender Einspeisungen zur Versorgung eines Anpassstellers.

Aus der DE 100 53 373 A1 ist ein Verfahren bekannt, das im Gegensatz zur DE 197 35 624 C1 asynchron betrieben wird und geringere Schaltverluste aufweist.

Aus der DE 33 42 184 A1 ist eine Fördereinrichtung bekannt, die Führungsschienen umfasst und kurvengängig mit einer Zwangslenkung ist.

Aus der DE 198 49 276 C2 ist ein Verfahren zum Durchfahren einer Strecke mit einem kurvengängigen Regalförderfahrzeug für ein Regallager bekannt. Solche Systeme werden mit einer Schleifleitung versorgt, die nicht verschleißfrei arbeitet.

Aus der Seite http://www.sew-eurodrive.de/deutsch/03 produkte/index produkte.htm sind Regallager und zugehörige Regalbediengeräte bekannt.

Aus dem Flyer der Firma SEW-EURODRIVE GmbH & Co. KG "Produktankündigung, MOVITRANS sind ebenfalls Systemkomponenten bekannt, wobei der Übertragerkopf als Pick UP bezeichnet wird und an einen Anpasssteller angeschlossen ist, welcher eine Versorgungsspannung für eine Last zur Verfügung stellt.

Aus der DE 196 26 966 A1 ist ein Transportsystem mit Satellitenfahrzeugen bekannt, bei dem das Hauptfahrzeug berührungslos mit Energie versorgt ist. Außerdem werden die Satellitenfahrzeuge ebenfalls berührungslos mit Energie versorgt. Nachteilig ist dabei, dass eine das Satellitenfahrzeug eine hohe Bauhöhe hat wegen des Raumbedarfs der U-förmigen Übertragerköpfe. Außerdem sind sowohl in der Hauptstrecke als auch in den Seitengassen beziehungsweise Regalen Primärkreise, also beispielsweise Linienleiter, verlegt, welche ständig bestromt werden müssen. Somit sind die Abstrahlungsverluste groß.

Aus dem Prospekt Planar E-Kerne für SMPS, also Schaltnetzteile, der Firma Kaschke KG aus dem Jahr 2003 sind E-förmige Planarkerne bekannt.

Der Erfindung liegt daher die Aufgabe zugrunde, ein Regallager und zugehöriges Regalbediengerät weiterzubilden, das kostengünstig und kompakt ausführbar ist.

Erfindungsgemäß wird die Aufgabe durch das Transportsystem nach den in Anspruch 1 angegebenen Merkmalen gelöst.

Wesentliche Merkmale der Erfindung bei dem Transportsysteme sind, dass es mit wenigstens einer Fahrstrecke aus Trag- und Spurführungselementen ausgeführt ist, auf der wenigstens ein Transportfahrzeug als Hauptfahrzeug geführt ist, das Mittel zum selbsttätigen Fortbewegen längs der Fahrstrecke hat und auf das Energie von einem längs der Fahrstrecke verlegten Primärkreis mit Schleifleitung oder berührungslos übertragen wird,
wobei das Hauptfahrzeug eine Hebebühne umfasst, die von einem Antrieb, insbesondere beispielsweise einem Elektromotor oder Getriebemotor, antreibbar ist und auf der sich mindestens ein Satellitenfahrzeug befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist,
wobei die Fahrstrecke einen Satellitenfahrstreckenabschnitt umfasst für die Positionierung und das Parken des Satellitenfahrzeuges,
wobei der Satellitenfahrstreckenabschnitt durch Positionierung des Hauptfahrzeuges auf längs dessen Fahrstrecke, quer zu dieser angeordnete Satellitenfahrstrecken fluchtend ausrichtbar ist, wobei diese Satellitenfahrstrecken auf Regalen angeordnet sind,
wobei Satellitenfahrstreckenabschnitte und Satellitenfahrstrecken Primärleiter umfassen, die berührungslos mit Energie versorgt sind aus dem Hauptfahrzeug.

Von Vorteil ist dabei, dass weniger Verkabelung notwendig ist, die Abstrahlung verringert ist, der Aufwand an Verteilerkästen und zugehörigen elektrischen und elektronischen Komponenten und die Kosten verringert sind. Außerdem ist das Transportsystem kompakt ausführbar.

Bei einer vorteilhaften Ausgestaltung ist der Antrieb der Hebebühne berührungslos mit Energie versorgt. Insbesondere ist der Antrieb des Satellitenfahrzeugs berührungslos mit Energie versorgt. Von Vorteil ist dabei, dass der Verschleiß und der Wartungsaufwand verringert sind.

Bei einer vorteilhaften Ausgestaltung ist vom Hauptfahrzeug an mindestens einen Primärleiter mindestens eines Regals mindestens einer Seitengasse Energie mindestens an einer Stelle berührungslos übertragbar. Von Vorteil ist dabei, dass nur dasjenige Regal oder diejenigen Regale bestromt werden, in welchen sich das Satellitenfahrzeug befindet. Andere Primärleitungen müssen nicht bestromt werden. Somit sind keine elektrischen Verteilungsvorrichtungen notwendig. Außerdem sind die Abstrahlung und die Kosten verringerbar.

Bei einer vorteilhaften Ausgestaltung ist zur berührungslosen Energieübertragung zumindest ein Übertragerkopf vorgesehen. Von Vorteil ist dabei, dass kompakt ausführbar ist und/oder mit einem hohen Wirkungsgrad.

Bei einer vorteilhaften Ausgestaltung ist das Hauptfahrzeug ein Einspeisegerät umfasst, das eine auf dem Hauptfahrzeug vorgesehenen Primärleitung speist, die induktiv gekoppelt ist mit einem Übertragerkopf, der mit einer Anschlussbox zur Impedanz-Kompensation verbunden ist, die zumindest eine in dem Satellitenfahrstreckenabschnitt vorgesehenen Primärleitung speist. Von Vorteil ist dabei, dass je nach Anwendung die Impedanz anpassbar ist.

Bei einer vorteilhaften Ausgestaltung umfasst das Hauptfahrzeug einen Primärleitung, die bei dem fluchtenden Ausrichten mit einem im Boden verlegten Übertragerkopf induktiv ankoppelbar ist, der über eine Anschlussbox zur Impedanzkompensation mit mindestens einer in einem Regal vorgesehenen Primärleitung verbunden ist. Von Vorteil ist dabei, dass die Position des Hauptfahrzeuges die Bestromung der Primärleiter der Regale steuert. Somit sind keine weiteren Verteilervorrichtungen notwendig.

Bei einer alternativ anders aufgebauten, vorteilhaften Ausgestaltung umfasst die Hebebühne eine Primärleitung, insbesondere einen als Primärleitung vorgesehenen Übertragerkopf, die bei dem fluchtenden Ausrichten des Hauptfahrzeugs und Vertikalpositionieren der Hebebühne mit einem am Regal vorgesehenen Übertragerkopf induktiv ankoppelbar ist, der über eine Anschlussbox zur lmpedanzkompensation mit mindestens einer in einem Regal vorgesehenen Primärleitung verbunden ist. Insbesondere erfolgt die Bestromung des Primärleiters des jeweiligen Regals aus dem Hauptfahrzeug. Von Vorteil ist dabei, dass das Positionieren des Hauptfahrzeuges und der Hebebühne die Bestromung der Primärleiter der Regale steuert.

Bei einer vorteilhaften Ausgestaltung ist zumindest ein Übertragerkopf mit U-förmigem oder C-förmigem oder E-förmigem Ferritkern ausgeführt. Von Vorteil ist dabei, dass ein hoher Wirkungsgrad erreichbar ist.

Bei einer vorteilhaften Ausgestaltung umfasst zumindest ein Übertragerkopf eine Wicklung, die als Flachwicklung ausgeführt ist. Von Vorteil ist dabei, dass eine sehr kompakte Ausführung für das Regallager samt Hauptfahrzeug und Satellitenfahrzeug erreichbar ist.

Bei einer vorteilhaften Ausgestaltung ist die Flachwicklung um den mittleren Schenkel eines E-förmigen Kerns herum angeordnet. Von Vorteil ist dabei, dass trotz Flachwicklung ein hoher Wirkungsgrad bei der berührungslosen Energieübertragung erreichbar ist.

Bei einer vorteilhaften Ausgestaltung sind die Schenkel des E kürzer als der Abstand der nächstbenachbarten Schenkel zueinander. Von Vorteil ist dabei, dass die Ausführung sehr kompakt ist.

Bei einer vorteilhaften Ausgestaltung ist die Primärleitung als Hinleitung und Rückleitung ausgeführt oder als Hinleitung und ein zumindest teilweise umgebendes Profil. Von Vorteil ist dabei, dass je nach Anwendung das System der berührungslosen Energieübertragung anpassbar ist.

Weitere Vorteile ergeben sich aus den Unteransprüchen.

Die Erfindung wird nun anhand von Abbildungen näher erläutert:

Die Erfindung umfasst Systeme zur berührungslosen Energieübertragung, wie im Stand der Technik dargestellt. Insbesondere ist dabei am beweglichen Teil ein Übertragerkopf vorgesehen, der mindestens eine Wicklung umfasst. Das nicht-bewegliche Teil des Systems umfasst als Primärleitung zumindest einen Linienleiter und eine Rückleitung. Die Rückleitung ist entweder in einem Profil oder auch als Linienleiter ausführbar. Der Übertragerkopf ist induktiv gekoppelt an den oder die Linienleiter. Wenn die Rückleitung in einem Profil erfolgt, ist der Übertragerkopf derart ausgeführt, dass zumindest sein Ferritkern die linienhafte Hinleitung zumindest teilweise umgibt. Der Übertragerkopf ist demgemäß U-förmig oder C-förmig ausgeführt. Die Sekundärwicklung , also die Wicklung des Übertragerkopfes, ist um die Schenkel des U oder C herum ausgeführt. Wenn die Rückleitung als Linienleiter ausgeführt ist, ist der Ferritkern vorteiligerweise als E-förmiger Kern auszuführen, wobei die beiden Leitungen, also Hinleiter und Rückleiter, zwischen den Schenkeln des E angeordnet sind oder in Schenkelrichtung ein wenig von dieser Position beabstandet sind.

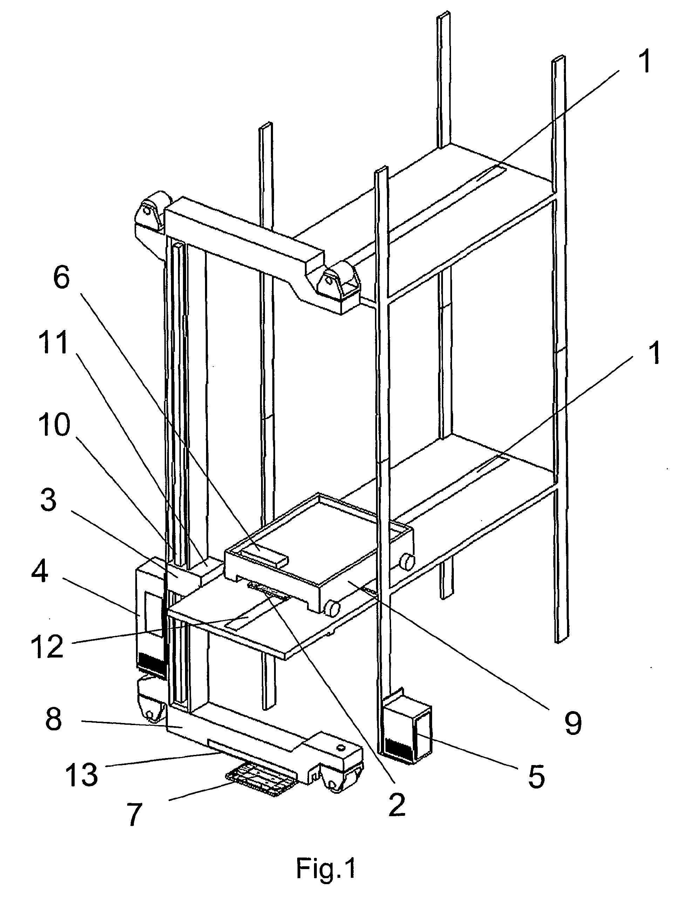

In der Figur 1 ist ein erfindungsgemäßes Regallager und zugehöriges Regalbediengerät gezeigt.

Das Regalbediengerät umfasst ein Hauptfahrzeug 8, auf dem ein Satellitenfahrzeug 9 vorgesehen ist, das von einer von einem Antrieb vertikal bewegbaren Hebebühne auf ein Regal des Regallagers verfahrbar ist. Das Regallager weist in Figur 1 zwei Regale auf.

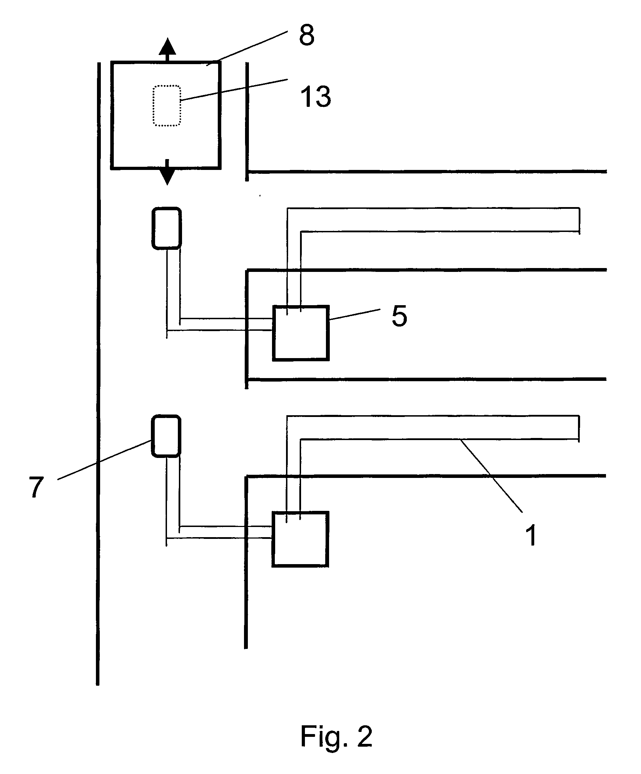

Die Regale sind übereinander in einer Seitengasse angeordnet. Weitere Seitengassen sind in Figur 2 symbolisch skizziert. In Figur 2 ist auch als Primärleitung der in einem Regal verlegte Linienleiter 1 mit Hin- und Rückleitung gezeigt, wobei diese Primärleitung mit einer Anschlussbox 5 elektrisch verbunden ist, die wiederum mit einem flachen Übertragerkopf 7, der im Boden fest angeordnet ist, verbunden ist. Die Anschlussbox 5 umfasst eine Elektronik zur Impedanz-Anpassung, die in Figur 3 beispielhaft gezeigt ist, wobei bei weiteren Ausführungsbeispielen auch ähnlich aufgebaute Schaltungen, die zumindest die Funktionen der Figur 3 umfassen, vorsehbar sind.

Auf der Hebebühne ist, wie in Figur 1 gezeigt, ein Linienleiter vorgesehen, der nach Erreichen der korrekten Höhe des Regals des Regallagers derart angeordnet ist, dass der in der Seitengasse sich befindende Linienleiter 1 in Flucht ist mit dem Linienleiter der Hebebühne. Somit ist es dem Satellitenfahrzeug ermöglicht, berührungslos mit Energie versorgt zu werden, insbesondere beim Fahren von der Hebebühne ins Regal hinein und zurück.

Zur Energieentnahme umfasst das Satellitenfahrzeug 9 einen flachen Übertragerkopf 2. Außerdem umfasst das Satellitenfahrzeug 9 eine Fahrzeugsteuerung, die aus dem Übertragerkopf 2 und einer damit elektrisch verbundenen, nicht gezeigten elektronischen Schaltung, die auch als Anpasssteller bezeichnet wird, versorgt wird. Bei weiteren erfindungsgemäßen Ausführungsbeispielen sind diese Komponenten auch integriert ausführbar und benötigen somit weniger Bauvolumen. Insbesondere ist ein Gehäuse für die integrierte Ausführung vorsehbar und somit die Masse reduzierbar, was zur Erhöhung der Dynamik des Fahrzeuges beiträgt.

Die Hebebühne ist vertikal beweglich und umfasst einen Antrieb hierzu, der berührungslos aus der Primärleitung des Hauptfahrzeuges versorgt ist. Dazu ist an der Hebebühne ein U-förmiger Übertragerkopf 3 vorgesehen und an dem Hauptfahrzeug als Primärleitung ein Linienleiter 10. Somit ist ein hoher Wirkungsgrad bei der Energieübertragung vorhanden. Der Raumbedarf für den U-förmigen Übertragerkopf stört nicht, da die berührungslose Energieversorgung seitlich am Hauptfahrzeug, also in Bewegungsrichtung angeordnet ist.

Der Antrieb des Hauptfahrzeugs und zumindest ein Einspeisegerät 4 sind mit nicht gezeigten Schleifleitungen elektrisch versorgt. Das Einspeisegerät 4 versorgt den vertikalen Linienleiter 10 und einen weiteren Linienleiter 13, der horizontal am Fahrzeugboden des Hauptfahrzeuges verlegt ist. Dieser weitere Linienleiter 13 wird ebenfalls aus dem Einspeisegerät 4 versorgt und ist derart angeordnet, dass bei Positionierung des Linienleiters 12 des Hauptfahrzeuges in Flucht zum Linieneileiter 1 der Seitengasse der Linienleiter 13 über einem flachen Übertragerkopf 7, der im Boden verlegt ist, positioniert ist. Somit ist von dem Linienleiter 13 Energie zu diesem flachen Übertragerkopf 7 übertragbar. Der flache Übertragerkopf 7 ist elektrisch mit der Anschlussbox 5 verbunden, die zur Verteilung an die Linienleiter 1 der Regale vorgesehen ist.

Das Satellitenfahrzeug umfasst zur Energieentnahme wiederum zumindest einen flachen Übertragerkopf 7, der an den Linienleiter der Hebebühne oder des Regals angekoppelt ist. Da das Einspeisegerät entweder direkt oder indirekt beide Linienleiter versorgt, ist beim Herausfahren des Satellitenfahrzeuges aus der Hebebühne keine wesentliche Schwankung der Energieversorgung merklich.

Bei weiteren erfindungsgemäßen Ausführungsbeispielen umfasst das Satellitenfahrzeug 9 zur Energieentnahme mehrere flache Übertragerköpfe 2. Somit ist je nach Bedarf mehr Energie an das bewegliche Fahrzeugteil übertragbar.

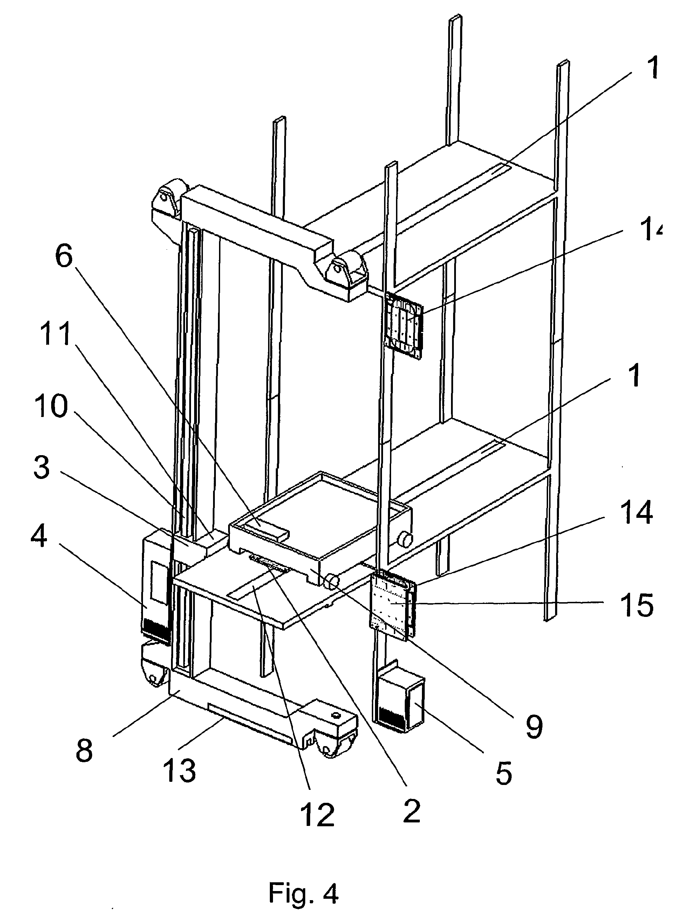

In der Figur 4 ist ein anderes erfindungsgemäßes Ausführungsbeispiel gezeigt, bei dem an der Hebebühne ein flacher Übertragerkopf 15 angebracht ist, welcher beim In-Flucht-Positionieren des Linienleiters 12 der Fahrstrecke des Satellitenfahrzeuges der Hebebühne und des Linienleiters 1 des Regals ebenfalls in Flucht positioniert ist vor einem mit dem Regal fest verbundenen flachen Übertragerkopf 14, der elektrisch mit dem Linienleiter 1 des Regals in Verbindung steht und diesen versorgt. Somit ist nur der jeweils benötigte Linienleiter 1 des jeweiligen Regals bestromt und es geht möglichst wenig Energie verloren.

Die Hebebühne umfasst die Anschlussbox 11, welche mit dem U-förmigen Übertragerkopf 3 elektrisch verbunden ist und den Linienleiter 12 der Hebebühne versorgt. In dem Ausführungsbeispiel nach Figur 4 versorgt die Anschlussbox 11 auch noch den flachen Übertragerkopf 15, der an der Hebebühne angebracht ist und bei dem In-Flucht-Positionieren den jeweiligen flachen Übertragerkopf 14 versorgt.

Figur 3 zeigt den Schaltplan der Anschlussbox 5. Dabei ist die Sekundärwicklung 7 des im Boden verlegten flachen Übertragerkopfes 7 der Figur 1 über einen Kondensator 16 zur Kompensation der Übertragerkopfinduktivität 7 mit der Primärwicklung des Anpasstransformators 17 verbunden. Dessen Sekundärwicklung ist über einen Kondensator 18 zur Kompensation der Strecke, also des Linienleiters 1, in Reihe mit dem Linienleiter 1 als Primärleiter verbunden. Somit sind die Impedanzen mittels der Kondensatoren 16 und 18 und mittels des Anpasstransformators 17 optimierbar.

In weiteren erfindungsgemäßen Ausführungsbeispielen ist statt der Versorgung des Hauptfahrzeuges mit Schleifleitung auch eine Versorgung mittels eines Systems für berührungslose Energieübertragung vorsehbar. Somit sind der Verschleiß und die Wartungskosten vorteiligerweise weiter reduzierbar.

In weiteren erfindungsgemäßen Ausführungsbeispielen sind statt zwei mehrere Regale vorsehbar, statt einer Hebebühne mehrere und statt einem Satellitenfahrzeug auch mehrere hiervon.

In weiteren erfindungsgemäßen Ausführungsbeispielen sind statt flachen Übertragerköpfen auch U-förmige oder C-förmige Übertragerköpfe verwendbar.

Die Erfindung bezieht sich nicht nur auf Regalbediengeräte sondern auch auf andere spurgeführte Transportsysteme mit wenigstens einer Fahrstrecke aus Trag- und Spurführungselementen, auf der wenigstens ein Transportfahrzeug als Hauptfahrzeug geführt ist, das Mittel zum selbsttätigen Fortbewegen längs der Fahrstrecke hat und auf das Energie von einem längs der Fahrstrecke verlegten Primärkreis berührungslos übertragen wird, wobei das Hauptfahrzeug eine Hebebühne umfasst, die von einem Antrieb, beispielsweise einem Elektromotor oder Getriebemotor, antreibbar ist und auf der sich mindestens ein Satellitenfahrzeug befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist. Dabei ist die Fahrstrecke des Satellitenfahrzeugs gebildet aus einem ersten Teil, der zur Hebebühne gehört und als Satellitenfahrstreckenabschnitt bezeichnet werden kann, und zumindest einem weiteren Teil der zu einem Regal oder dergleichen gehört und als Satellitenfahrstrecke bezeichnet werden kann. Dabei ist in der Fahrstrecke des Satellitenfahrzeugs einerseits also in dem sich auf der Hebebühne befindenden Teil und andererseits in dem auf dem Regal sich befindenden Teil ein Primärleiter, wie beispielsweise ein Linienleiter oder eine Primärwicklung, vorgesehen.

Das Satellitenfahrzeug umfasst einen Übertragerkopf der mit dem Primärleiter induktiv gekoppelt ist und somit Energieübertragung berührungslos ermöglicht. Ebenso umfasst die Hebebühnen einen Übertragerkopf der mit einem Primärleiter, wie Linienleiter oder Primärwicklung, induktiv gekoppelt ist und somit die Hebebühne ebenfalls berührungslos mit Energie versorgbar ist. Der Übertragerkopf ist entweder U-förmig oder vorteiligerweise flach ausführbar. Bei der flachen Ausführung umfasst der Übertragerkopf eine Flachwicklung, die um den mittleren Schenkel eines E-förmigen Kerns herum angeordnet ist. Die Schenkel des E sind dabei sehr kurz ausführbar, weil die Flachwicklung nur eine geringe Höhe in Richtung der Schenkel des E hat. Die Primärleitung ist dabei als Hinleitung und Rückleitung ausgeführt. Im Vergleich zu einem U Wesentlich ist bei der Erfindung weiter, dass die Bestromung des Primärleiters des jeweiligen Regals aus dem Hauptfahrzeug erfolgt und somit Verdrahtungsaufwand einsparbar ist. Außerdem muss kein aufwendiges Energieverteilen mit Verteilern oder sogar steuerbaren Verteilerkästen vorgesehen werde. Bei einem Regallager mit vielen Regalen sind daher die Einsparungen an Aufwand und Kosten sehr groß.

Die Primärleitung ist als lang gestreckte Leiteranordnung ausgebildet. Das Einspeisegerät 4 ist als Mittelfrequenzquelle zur Versorgung der angeschlossenen Primärleitungen ausgebildet.

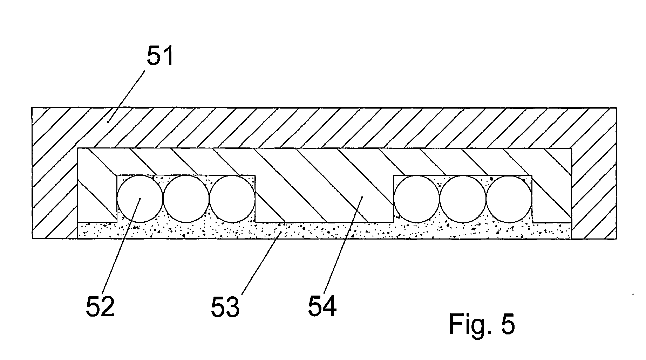

In Figur 5 ist ein beispielhafter flacher Übertragerkopf 2,7,14 im Querschnitt symbolisch gezeigt. Ein E-förmiger Planarkern 54 ist mit einer einlagigen Flachwicklung 52 bewickelt, die in einer Vergussmasse 53 vergossen ist. Der E-förmige Planarkern ist teilweise von einer Aluminiumplatte 51 umgeben. In weiteren erfindungsgemäßen Ausführungsbeispielen sind statt einlagiger auch mehrlagige Flachwicklungen vorsehbar.

In anderen erfindungsgemäßen Ausführungsbeispielen sind auch gleich wirkende Übertragerköpfe verwendbar, die nicht gleich sondern nur ähnlich aufgebut sind.

### Bezugszeichenliste

- 1: Linienleiter für Seitengasse
- 2: Übertragerkopf, flach
- 3: Übertragerkopf, U-förmig
- 4: Einspeisegerät
- 5: Anschlussbox
- 6: Fahrzeugsteuerung
- 7: Übertragerkopf, flach
- 8: Hauptfahrzeug
- 9: Satellitenfahrzeug
- 10: Hauptfahrzeug-Linienleiter, vertikal
- 11: Anschlussbox
- 12: Linienleiter, Hebebühne
- 13: horizontal am Fahrzeugboden verlegter Linienleiter am Hauptfahrzeug
- 14: Übertragerkopf, flach
- 15: Übertragerkopf, flach
- 16: Kondensator zur Kompensation
- 17: Anpasstrafo
- 18: Kondensator zur Kompensation der Strecke
- 51: Aluminiumplatte
- 52: Flachwicklung
- 53: Vergussmasse
- 54: Planarkern

## Patentansprüche

1. Spurgeführte Transportsysteme mit wenigstens einer Fahrstrecke aus Trag- und Spurführungselementen, auf der wenigstens ein Transportfahrzeug als Hauptfahrzeug geführt ist, das Mittel zum selbsttätigen Fortbewegen längs der Fahrstrecke hat und auf das Energie von einem längs der Fahrstrecke verlegten Primärkreis mit Schleifleitung oder berührungslos übertragen wird,
**dadurch gekennzeichnet, dass**
das Hauptfahrzeug eine Hebebühne umfasst, die von einem Antrieb, insbesondere beispielsweise einem Elektromotor oder Getriebemotor, antreibbar ist und auf der sich mindestens ein Satellitenfahrzeug befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist,
wobei die Fahrstrecke einen Satellitenfahrstreckenabschnitt umfasst für die Positionierung und das Parken des Satellitenfahrzeuges,
wobei der Satellitenfahrstreckenabschnitt durch Positionierung des Hauptfahrzeuges auf längs dessen Fahrstrecke, quer zu dieser angeordnete Satellitenfahrstrecken fluchtend ausrichtbar ist, wobei diese Satellitenfahrstrecken auf Regalen angeordnet sind,
wobei Satellitenfahrstreckenabschnitte und Satellitenfahrstrecken Primärleiter umfassen, die berührungslos mit Energie versorgt sind aus dem Hauptfahrzeug.

2. Transportsystem nach mindestens einem der vorangegangenen Ansprüche,
**dadurch gekennzeichnet, dass**
der Antrieb der Hebebühne berührungslos mit Energie versorgt ist.

3. Transportsystem nach mindestens einem der vorangegangenen Ansprüche,
**dadurch gekennzeichnet, dass**
der Antrieb des Satellitenfahrzeugs berührungslos mit Energie versorgt ist.

4. Transportsystem nach mindestens einem der vorangegangenen Ansprüche,
**dadurch gekennzeichnet, dass**
vom Hauptfahrzeug an mindestens einen Primärleiter mindestens eines Regals mindestens einer Seitengasse Energie mindestens an einer Stelle berührungslos übertragbar ist.

5. Transportsystem nach mindestens einem der vorangegangenen Ansprüche,
**dadurch gekennzeichnet, dass**
zur berührungslosen Energieübertragung zumindest ein Übertragerkopf vorgesehen ist.

6. Transportsystem nach mindestens einem der vorangegangenen Ansprüche,
**dadurch gekennzeichnet, dass**
das Hauptfahrzeug ein Einspeisegerät umfasst, das eine auf dem Hauptfahrzeug vorgesehenen Primärleitung speist, die induktiv gekoppelt ist mit einem Übertragerkopf, der mit einer Anschlussbox 11 zur Impedanz-Kompensation verbunden ist, die zumindest eine in dem Satellitenfahrstreckenabschnitt vorgesehenen Primärleitung speist.

7. Transportsystem nach mindestens einem der vorangegangenen Ansprüche,
**dadurch gekennzeichnet, dass**
das Hauptfahrzeug einen Primärleitung umfasst, die bei dem fluchtenden Ausrichten mit einem im Boden verlegten Übertragerkopf induktiv ankoppelbar ist, der über eine Anschlussbox 5 zur Impedanzkompensation mit mindestens einer in einem Regal vorgesehenen Primärleitung verbunden ist.

8. Transportsystem nach mindestens einem der Ansprüche 1 bis 6,
**dadurch gekennzeichnet, dass**
die Hebebühne eine Primärleitung, insbesondere einen als Primärleitung vorgesehenen Übertragerkopf, umfasst, die bei dem fluchtenden Ausrichten des Hauptfahrzeugs und Vertikalpositionieren der Hebebühne mit einem am Regal vorgesehenen Übertragerkopf induktiv ankoppelbar ist, der über eine Anschlussbox 5 zur Impedanzkompensation mit mindestens einer in einem Regal vorgesehenen Primärleitung verbunden ist.

9. Transportsystem nach mindestens einem der vorangegangenen Ansprüche,
**dadurch gekennzeichnet, dass**
die Bestromung des Primärleiters des jeweiligen Regals aus dem Hauptfahrzeug erfolgt.

10. Transportsystem nach mindestens einem der vorangegangenen Ansprüche,
**dadurch gekennzeichnet, dass**
zumindest ein Übertragerkopf mit U-förmigem oder C-förmigem oder E-förmigem Ferritkern ausgeführt ist.

11. Transportsystem nach mindestens einem der vorangegangenen Ansprüche,
**dadurch gekennzeichnet, dass**
zumindest ein Übertragerkopf eine Wicklung umfasst, die als Flachwicklung ausgeführt ist.

12. Transportsystem nach mindestens einem der vorangegangenen Ansprüche,
**dadurch gekennzeichnet, dass**
die Flachwicklung um den mittleren Schenkel eines E-förmigen Kerns herum angeordnet ist.

13. Transportsystem nach mindestens einem der vorangegangenen Ansprüche,
**dadurch gekennzeichnet, dass**
die Schenkel des E kürzer sind als der Abstand der nächstbenachbarten Schenkel zueinander.

14. Transportsystem nach mindestens einem der vorangegangenen Ansprüche,
**dadurch gekennzeichnet, dass**
die Primärleitung als Hinleitung und Rückleitung ausgeführt ist oder als Hinleitung und ein zumindest teilweise umgebendes Profil.

## Claims

1. Track-guided transport systems comprising at least one travel path composed of supporting and track-guiding elements, on which at least one transport vehicle is guided as main vehicle, which has means for automatically moving along the travel path and to which energy is transmitted by contact conductor or contactlessly from a primary circuit laid along the travel path,
**characterised in that**
the main vehicle comprises a lifting platform which may be operated by a drive, particularly an electric motor or geared motor, for example, and on which there is located at least one satellite vehicle which similarly comprises a drive, such as an electric motor or geared motor, for automatically moving along a further travel path and which is designed for the transport of goods,
wherein the travel path comprises a satellite travel path section for positioning and parking the satellite vehicle,
wherein the satellite travel path section may be oriented by positioning the main vehicle so as to be aligned with satellite travel paths disposed along the travel path thereof, transversely to the said travel path, these satellite travel paths being disposed on racks,
wherein satellite travel path sections and satellite travel paths comprise primary conductors which are contactlessly provided with energy from the main vehicle.

2. A transport system according to at least one of the preceding claims,
**characterised in that**
the drive of the lifting platform is contactlessly supplied with energy.

3. A transport system according to at least one of the preceding claims,
**characterised in that**
the drive of the satellite vehicle is contactlessly supplied with energy.

4. A transport system according to at least one of the preceding claims,
**characterised in that**
energy may be transmitted contactlessly at least at one location from the main vehicle to at least one primary conductor of at least one rack of at least one side aisle.

5. A transport system according to at least one of the preceding claims,
**characterised in that**
at least one transformer head is provided for the contactless energy transmission.

6. A transport system according to at least one of the preceding claims,
**characterised in that**
the main vehicle comprises a feed-in device which feeds a primary line provided on the main vehicle, which is inductively coupled with a transformer head connected to a junction box 11 for impedance compensation, which feeds at least one primary line provided in the satellite travel path section.

7. A transport system according to at least one of the preceding claims,
**characterised in that**
the main vehicle comprises a primary line which, with the aligned orientation, may be inductively coupled with a transformer head laid in the base, which transformer head is connected via a junction box 5 for impedance compensation to at least one primary line provided in a rack.

8. A transport system according to at least one of Claims 1 to 6,
**characterised in that**
the lifting platform comprises a primary line, particularly a transformer head provided as primary line, which, with the aligned orientation of the main vehicle and vertical positioning of the lifting platform, may be inductively coupled with a transformer head provided on the rack, which transformer head is connected via a junction box 5 for impedance compensation to at least one primary line provided in a rack.

9. A transport system according to at least one of the preceding claims,
**characterised in that**
the supplying of the primary line of the respective rack with current takes place from the main vehicle.

10. A transport system according to at least one of the preceding claims,
**characterised in that**
at least one transformer head is designed with a U-shaped or C-shaped or E-shaped ferrite core.

11. A transport system according to at least one of the preceding claims,
**characterised in that**
at least one transformer head comprises a winding which is designed as a flat winding.

12. A transport system according to at least one of the preceding claims,
**characterised in that**
the flat winding is disposed around the middle leg of an E-shaped core.

13. A transport system according to at least one of the preceding claims,
**characterised in that**
the legs of the E are shorter than the spacing of the immediately adjacent legs from one another.

14. A transport system according to at least one of the preceding claims,
**characterised in that**
the primary line is designed as a go-and-return line or as a go line and an at least partially enclosing profile.

## Revendications

1. Système de transport guidé avec au moins un parcours composé d'éléments de support et de guidage sur lequel est guidé au moins un véhicule de transport en tant que véhicule principal qui possède des moyens pour le déplacement automatique le long du parcours et auquel de l'énergie est transmise par ligne de contact ou sans contact par un circuit primaire posé le long du parcours,
**caractérisé par le fait**
**que** le véhicule principal comprend une plateforme de levage qui peut être entraînée par un entraînement, en particulier par exemple un moteur électrique ou motoréducteur, et sur laquelle se trouve au moins un véhicule satellite qui comprend également un entraînement, comme par exemple un moteur électrique ou motoréducteur, pour le déplacement automatique le long d'un autre parcours et est conçu pour le transport de marchandises,
le parcours comprenant une section de parcours de satellite pour le positionnement et le parcage du véhicule satellite,
la section de parcours de satellite pouvant, par positionnement du véhicule principal, être alignée avec des parcours de satellite disposés le long de son parcours, transversalement à celui-ci, ces parcours de satellite étant disposés sur des rayonnages,
sections de parcours de satellite et parcours de satellite comprenant des conducteurs primaires qui sont alimentés en énergie sans contact à partir du véhicule principal.

2. Système de transport selon au moins l'une des revendications précédentes,
**caractérisé par le fait**
**que** l'entraînement de la plateforme de levage est alimenté en énergie sans contact.

3. Système de transport selon au moins l'une des revendications précédentes,
**caractérisé par le fait**
**que** l'entraînement du véhicule satellite est alimenté en énergie sans contact.

4. Système de transport selon au moins l'une des revendications précédentes,
**caractérisé par le fait**
**que** de l'énergie peut être transmise sans contact depuis le véhicule principal à au moins un conducteur primaire d'au moins un rayonnage d'au moins une allée latérale au moins à un endroit.

5. Système de transport selon au moins l'une des revendications précédentes,
**caractérisé par le fait**
**qu'**il est prévu au moins une tête de transmission pour la transmission d'énergie sans contact.

6. Système de transport selon au moins l'une des revendications précédentes,
**caractérisé par le fait,**
**que** le véhicule principal comprend un appareil d'alimentation qui alimente une ligne primaire prévue sur le véhicule principal qui est couplée par induction avec une tête de transmission qui est reliée à une boîte de connexion 11 de compensation d'impédance qui alimente au moins une ligne primaire prévue dans la section de parcours de satellite.

7. Système de transport selon au moins l'une des revendications précédentes,
**caractérisé par le fait**
**que** le véhicule principal comprend une ligne primaire qui peut être couplée par induction, lors de l'alignement, avec une tête de transmission posée dans le sol qui est reliée par une boîte de connexion 5 de compensation d'impédance à au moins une ligne primaire prévue dans un rayonnage.

8. Système de transport selon au moins l'une des revendications 1 à 6,
**caractérisé par le fait**
**que** la plateforme de levage comprend une ligne primaire, en particulier une tête de transmission prévue comme ligne primaire, qui peut être couplée par induction, lors de l'alignement du véhicule principal et du positionnement vertical de la plateforme de levage, avec une tête de transmission prévue sur le rayonnage qui est reliée par une boîte de connexion 5 de compensation d'impédance à au moins une ligne primaire prévue dans un rayonnage.

9. Système de transport selon au moins l'une des revendications précédentes,
**caractérisé par le fait**
**que** l'alimentation du conducteur primaire du rayonnage respectif s'effectue à partir du véhicule principal.

10. Système de transport selon au moins l'une des revendications précédentes,
**caractérisé par le fait**
**qu'**au moins une tête de transmission est réalisée avec un noyau de ferrite en U, en C ou en E.

11. Système de transport selon au moins l'une des revendications précédentes,
**caractérisé par le fait**
**qu'**au moins une tête de transmission comprend un enroulement qui est réalisé sous forme d'enroulement plat.

12. Système de transport selon au moins l'une des revendications précédentes,
**caractérisé par le fait**
**que** l'enroulement plat est disposé autour de la branche centrale d'un noyau en E.

13. Système de transport selon au moins l'une des revendications précédentes,
**caractérisé par le fait**
**que** les branches du E sont plus courtes que la distance des branches immédiatement voisines entre elles.

14. Système de transport selon au moins l'une des revendications précédentes,
**caractérisé par le fait**
**que** la ligne primaire est réalisée sous forme de ligne aller et ligne retour ou sous forme de ligne aller et d'un profilé l'entourant au moins partiellement.
